# EUROPEAN PATENT SPECIFICATION

(11) **EP 3 710 548 B1**
(45) Date of publication and mention of the grant of the patent: **07.06.2023**
(21) Application number: 18879499.4
(22) Date of filing: 16.11.2018
(51) Int. Cl.: C09K 3/10, D21H 19/68, D21H 19/84, D21H 27/10

(54) **HEAT-SEAL COATINGS**
HEISSSIEGELBESCHICHTUNGEN
REVÊTEMENTS THERMOSCELLABLES

(30) Priority: 17.11.2017 US 201762587598 P
(43) Date of publication of application: 23.09.2020
(73) Proprietor: Imerys USA, Inc., Roswell, GA 30076 (US)
(72) Inventor: MEIZANIS, Paul, Gray Georgia 31032 (US); PRATT, Gareth V., Cornwall Cornwall TR8 5SL (GB)
(74) Representative: Haseltine Lake Kempner LLP
(86) International application number: PCT/US2018/061468
(87) International publication number: WO 2019/099792

(56) References cited:
- EP-A2- 0 432 886
- WO-A1-02/00785
- WO-A1-2011/003566
- US-A- 5 102 734
- US-A1- 2015 344 729

## Description

### CLAIM FOR PRIORITY

This PCT International Application claims the benefit of priority of U.S. Provisional Patent Application No. 62/587,598, filed November 17, 2017.

### TECHNICAL FIELD

Embodiments of the present disclosure relate generally to coatings, e.g., heat-seal coatings, compositions and articles comprising such coatings, and methods of making thereof.

### BACKGROUND

Various coatings are used to protect against degradation that can occur upon exposure to water or other moisture. For example, paper products used for packaging liquid or food often are coated with hydrophobic materials, such as polymers. However, polymeric coatings can provide insufficient protection. For example, coatings that are provided on only one surface, or that are not heat-sealed, may allow moisture to penetrate a container and compromise its strength or stability. Additionally, the process for applying coatings can lead to interactions between coated surfaces such that they adhere or stick together or "block" each other, thus interrupting manufacturing. Efficiency in manufacturing can be particularly important for high speed processes. Further, paper products coated with some types of polymeric materials, such as extruded polyethylene, or polyethylene terephthalate are poorly recyclable or repulpable, and thus are not environmentally friendly or cost-effective from a life cycle standpoint. Therefore, there is a need to develop coatings that address some or all of these considerations. EP 0432886 A2 relates to a heat-sealable multilayer film comprising a substrate layer of polymeric material having on a first surface thereof a polyester heat-sealable layer and on a second surface thereof a backing layer. WO 2011/003566 A1 relates to a non-foil laminated pouch material for packaging liquid food or beverage.

### SUMMARY OF THE DISCLOSURE

The present invention is defined in and by the appended claims. In a first aspect, there is provided an article in accordance with claim 1. The present disclosure includes articles with heat-seal coatings. For example, the present disclosure includes an article comprising at least one substrate having a first surface and a second surface; a first polymer that is water-dispersible covering the first surface of the at least one substrate to form a coating; and a second polymer partially covering the second surface of the at least one substrate to form a discontinuous layer, the second polymer being the same or different from the first polymer; wherein the coating of the first surface is capable of forming a heat-seal with the discontinuous layer on the second surface. In some examples, at least one of the first polymer or the second polymer may comprise a copolymer formed from at least two different monomers. The at least two different monomers may include, for example, ethylene and an unsaturated carboxylic acid monomer. For example, the unsaturated carboxylic acid monomer may be chosen from acrylic acid or methacrylic acid. In at least one example, the at least one substrate may comprise paper. In some examples, the article may have a repulpability of at least about 85%. In at least one example, the second polymer may comprise polyetherimide or a derivative thereof.

A dry coat weight of the second polymer on the second surface may range from about 0.1 g/m² to about 3.0 g/m². For example, a dry coat weight of the coating on the first surface may range from about 1.0 g/m² to about 9.0 g/m².

The coating of the first surface further comprises a mineral. The mineral comprises a phyllosilicate mineral. For example, the phyllosilicate mineral may comprise talc, kaolin, mica, or a combination thereof. Additionally, the discontinuous layer of the second surface may further comprise a mineral.

In some cases, the coating of the first surface may comprise an inner layer comprising a third polymer and the mineral, wherein the third polymer is the same as or different than the first polymer; and an outer layer comprising the first polymer without the mineral. In some examples, the coating may comprise from about 10% to about 80% the first polymer by weight of the coating. In some examples, the coating of the first surface further may comprise a pre-coat layer between the inner layer and the first surface of the at least one substrate, the pre-coat layer comprising cellulose or a third polymer. In some cases, the third polymer may comprise a styrene-containing copolymer. In at least one example, the pre-coat layer may further comprise a mineral.

The article may be a heat-sealed container, the first surface being an inner surface of the container, and the second surface being an outer surface of the container. In some examples, the heat-sealed container may be configured to hold a liquid at a temperature ranging from about 10°C to about 100°C. In some cases, the article may be a heat-sealed container, the first surface of the at least one substrate being an outer surface of the container, and the second surface of the at least one substrate being an inner surface of the container.

Further disclosed herein are methods of making articles. In a second aspect, there is provided a method for making an article in accordance with claim 10. The method comprises forming a coating on a first surface of a substrate by applying an aqueous dispersion comprising a first polymer to the first surface; and forming a discontinuous layer on a second surface of the substrate by applying a dispersion comprising a second polymer to portions of the second surface, wherein the second polymer is the same or different from the first polymer; wherein the coating of the first surface is capable of forming a heat-seal with the discontinuous layer on the second surface. In some cases, the aqueous dispersion applied to the second surface may comprise an organic solvent. In some examples, the aqueous dispersion applied to the second surface of the substrate may further comprise a mineral. In at least one example, the substrate may comprise paper. In some cases, the method may further comprise heat-sealing a portion of the coating to a portion of the discontinuous layer.

At least one of the first polymer or the second polymer may be formed from at least two different monomers. In some examples, the at least two different monomers include ethylene and an unsaturated carboxylic acid monomer. In some examples, the dry coat weight of the second polymer on the second surface may range from 0.1 g/m² to 3.0 g/m²

The aqueous dispersion applied to the first surface further comprises a mineral. In some examples, forming the coating on the first surface may comprise applying a first aqueous dispersion comprising the first polymer and the mineral to form an inner layer; and applying to the inner layer a second aqueous dispersion comprising the first polymer without the mineral to form an outer layer. In some cases, forming the coating on the first surface may further comprise: before applying the first aqueous dispersion, applying a third aqueous dispersion comprising a third polymer different from the first polymer to form a pre-coat layer, such that the pre-coat layer is between the first surface of the substrate and the inner layer. In some examples, the third polymer may comprise cellulose or a styrene-containing copolymer. In at least one example, the third aqueous dispersion may further comprise a mineral.

The mineral comprises a phyllosilicate mineral. For example, the mineral may comprise talc, kaolin, mica, or a combination thereof. In some cases, the coating may comprise from about 10% to about 80% the first polymer by weight of the coating.

### BRIEF DESCRIPTION OF DRAWINGS

Embodiments and various aspects of the present disclosure are illustrated in the following detailed description and the accompanying figures. Various features shown in the figures are not drawn to scale.
FIGS. 1A-1C show an exemplary cup with coatings in accordance with some aspects of the present disclosure. FIG. 1A shows a perspective view of the cup, FIG. 1B shows a cross-section of bottom and side parts of the cup with heat-sealed coatings, and FIG. 1C shows a cross-section of the cup side having heat-sealed coatings.
FIG. 2 illustrates exemplary layers of coatings in accordance with some aspects of the present disclosure.

### DETAILED DESCRIPTION

Particular aspects of the present disclosure are described in greater detail below. The terms and definitions provided herein control, if in conflict with terms and/or definitions incorporated by reference.

As used herein, the terms "comprises," "comprising," or any other variation thereof are intended to cover a non-exclusive inclusion, such that a process, method, composition, article, or apparatus that comprises a list of elements does not include only those elements, but may include other elements not expressly listed or inherent to such process, method, composition, article, or apparatus. The term "exemplary" is used in the sense of "example" rather than "ideal."

As used herein, the singular forms "a," "an," and "the" include plural reference unless the context dictates otherwise. The terms "approximately" and "about" refer to being nearly the same as a referenced number or value. As used herein, the terms "approximately" and "about" should be understood to encompass ± 5% of a specified amount or value.

The present disclosure includes articles, e.g., paper products, coated with one or more materials to serve as a barrier to protect against bulk aqueous liquids and water condensation. The terms "coated" and "coating" as used herein are to be interpreted broadly and not limited, for example, to uniform coverage of a surface, or to covering an entire surface or surface area of a substrate. When a surface of a substrate comprises a coating, the surface may be fully or only partially covered by the coating. The coating(s) may provide a water barrier against hot and/or cold substances, e.g., hot and/or cold liquids, contained in the articles.

The articles herein may comprise a substrate with first and second surfaces, e.g., which may represent inner and outer surfaces (or vice versa) of the article. The article comprises a first polymer covering the first surface to form a coating and a second polymer only partially covering the second surface of the substrate, e.g., to form a discontinuous layer that allows portions of the substrate to remain uncovered. The coating(s) on the first and second surfaces may be capable of forming a heat-seal.

Also disclosed herein are methods of making such articles. In some examples, the method may comprise applying a dispersion, e.g., an aqueous dispersion and/or a non-aqueous dispersion, to one or more surfaces of a substrate to form one or more coatings. The dispersions may comprise one or more polymers with or without a mineral. The methods herein may further comprise heat sealing one or more surfaces of a substrate together.

Articles according to the present disclosure may comprise at least one substrate having one or more coatings. Each substrate may comprise one, two, three, four, five, or more surfaces that each includes a coating. For example, the substrate may have a first surface and a second surface opposite the first surface, wherein the entire first surface, the entire second surface, or portions thereof, are covered by respective coatings. In the present disclosure, the article may comprise two or more substrates, which may be coupled together. For example, two or more substrates may be heat-sealed together via complementary coated surfaces to form an article.

The substrates herein may comprise cellulosic materials. Such cellulosic-based substrates may include paper. The term "paper" as used herein should be understood to mean all forms of paper, including board, such as paperboard products, white-lined board, linerboard, and cardboard. Paper may also include newsprint, uncoated groundwood, coated groundwood, coated free sheet, uncoated free sheet, packaging papers, industrial papers, corrugating medium, writing paper, typing paper, photo quality paper, or wallpaper. The cellulosic-based substrates may be formed from one or more webs, e.g., a single-layered or multi-layered paper web formed from a blend of fibers. Other types of substrates that may also be used include polymeric substrates, metal-based substrates, and textiles. Exemplary metal-based substrates include aluminum foil, metallized polymeric films, metallized paper, and AlOx or SiOx coated polymeric films. Exemplary polymeric substrates include polyethylene terepthalate, polylactic acid, polyhydroxyalkanoates, polyolefins such as biaxially oriented polyethylene terepthalate, polypropylene, biaxially oriented polypropylene, cast polypropylene, polyethylene, polyamides such as biaxially oriented polyamide and nylon, and polyvinyl chloride.

As mentioned above, one or more surface of the substrate(s) may comprise a coating fully covering or only partially covering the surface(s). Each of the coatings may comprise one or more layers of a material or a combination of materials. In some examples, the article may comprise a substrate and a coating comprising one or more layers that cover a first surface of the substrate. Additionally or alternatively, the article may comprise another coating comprising one or more layers that cover a second surface of the substrate.

The coatings herein may serve as a water barrier, that is, a barrier against water and water-containing/aqueous substances, e.g., to protect the substrate from liquid or other moisture that could compromise the integrity of the substrate and/or the integrity of the article. The coatings may be sealable, e.g., heat-sealable, for adhering various portions of the article together and/or to maintain a suitable water barrier along seams or junctures of the article. Materials suitable for the coatings herein include, but are not limited to, polymers (including copolymers, terpolymers, tetrapolymers, etc.), polysaccharide materials, and minerals.

Coatings according to the present disclosure may comprise a single polymer or a combination of polymers. In some examples, the coating may include at least one layer that does not include any polymeric material.

One or more of the polymers may be water-dispersible. That is, the water-dispersible polymers may be capable of being dispersed into water or other aqueous carrier, e.g., without the use of a dispersant such as a surfactant. Additionally or alternatively, the aqueous carrier may be added to water-dispersible polymers to form a stable dispersion. Such stable dispersion may have at least one-month shelf stability at room temperature. The water-dispersible polymers may include nonionic or anionic functionality that render them water-dispersible. In some cases, the water-dispersible polymers may also include watersoluble polymers. Exemplary water-dispersible polymers include styrene polymer (e.g., styrene-containing or styrene-based polymers such as styrene butadiene or styrene acrylic latex), polymers of ethylene monomer and an unsaturated carboxylic acid monomer (e.g., ethylene acrylic acid copolymer), polyethylene terephthalate, any derivatives thereof, any copolymers thereof, and any combinations thereof. In at least one example, the water-dispersible polymers comprise ethylene acrylic acid or a derivative thereof.

Other exemplary polymers that may be used in the coatings herein are polyetherimide and derivatives thereof, which may optionally be applied in substantially pure form or dispersed in a suitable solvent, such as an organic solvent, for application.

In some cases, the polymer(s) may be formed from more than one monomer, e.g., two, three, four, or more different monomers. For example, the polymer may be a copolymer that comprises (e.g., is formed from) two different monomers. In another example, the polymer may be a terpolymer that comprises (is formed from) three different monomers. In another example, the polymer may be a tetrapolymer that comprises (is formed from) four different monomers. In some cases, the polymer may comprise an ionomer, e.g., a polymer comprising repeat units of both electrically neutral repeating units and a fraction of ionized units. In at least one example, the polymer comprises alkylene monomers and unsaturated acid monomers. Exemplary alkylene monomers include, but are not limited to, ethylene monomers (e.g., ethane), propylene monomers (e.g., propene), butylene monomers (e.g., butane), pentylene monomers (e.g., pentene), hexylene monomere (e.g., hexane), heptylene monomers (e.g., heptane), octylene monomers (e.g., heptene), styrene monomers, and combinations thereof. Exemplary unsaturated acid monomers include, but are not limited to, unsaturated carboxylic acids (such as acrylic acid monomers, methacrylic acid monomers, bromoacrylic acid monomers, ethyl acrylic acid monomers, propyl acrylic acid monomers, etc.), itaconic acid monomers, methyl hydrogen maleate monomers, maleic acid monomers, terephthalic acid monomers, ethylenically unsaturated acids, salts thereof, and combinations thereof. In the cases where the unsaturated acid monomers include salts of unsaturated acids, the salts may include salts derived from volatile alkali (such as, e.g., ammonia and amino methyl propanol), and carboxylic acid salts (e.g., carboxylic acid salt of potassium hydroxide). In at least one example, the polymer may comprise a styrene-containing or styrene-based polymer, such as styrene butadiene, or a derivative thereof.

Exemplary polymers that can be used herein include, but are not limited to, ethylene/acrylic acid copolymers, ethylene/methacrylic acid copolymers, ethylene/itaconic acid copolymers, ethylene/methyl hydrogen maleate copolymers, ethylene/maleic acid copolymers, ethylene/acrylic acid/methyl methacrylate terpolymers, ethylene/acrylic acid/ethyl acrylate terpolymers, ethylene/methacrylic acid/ethyl acrylate terpolymers, ethylene/itaconic acid/methyl methacrylate terpolymers, ethylene/methyl hydrogen maleate/ethyl acrylate terpolymers, ethylene/acrylic acid/vinyl acetate terpolymers, ethylene/methacrylic acid/vinyl acetate terpolymers, ethylene/acrylic acid/vinyl alcohol terpolymers, ethylene/propylene/acrylic acid terpolymers, ethylene/acrylamide/acrylic acid terpolymers, ethylene/styrene/acrylic acid terpolymers, ethylene/methacrylic acid/acrylonitrile terpolymers, ethylene/fumaric acid/vinyl methyl ether terpolymers, ethylene/vinyl chloride/acrylic acid terpolymers, ethylene/vinylidene chloride/acrylic acid terpolymers, polyethylene/acrylic acid graft copolymers, polyethylene/methacrylic acid graft copolymers, polymerized ethylene/propylene/acrylic acid graft terpolymers, and combinations thereof.

The coating(s) may comprise at least one copolymer of ethylene and an unsaturated carboxylic acid. The unsaturated carboxylic acid monomer(s) may comprise, for example, acrylic acid, methacrylic acid, or a combination thereof. The copolymer of ethylene and unsaturated carboxylic acid may comprise from about 1% to about 50% unsaturated carboxylic acid by weight, e.g. from about 5% to about 50%, from about 5% to about 30%, from about 10% to about 40%, or from about 10% to about 30% unsaturated carboxylic acid, by weight of the coating. In at least one example, the copolymer of ethylene and unsaturated carboxylic acid may comprise from about 5% to about 30% unsaturated carboxylic acid, by weight of the coating. In some examples, the polymers may be ethylene acrylic acid copolymers, e.g., copolymers comprising ethylene monomers (CH₂=CH₂) and acrylic acid monomers (CH₂=CH-CO₂H).

The polymers of the coatings herein may have a desired melting point, e.g., to provide for heat sealability and/or to facilitate manufacturing of the coatings. For example, coatings comprising the polymers may be heat sealed together when heated at or above the polymers' melting points. In some examples, the polymers may have a melting point ranging from about 50°C to about 200°C, e.g., from about 70°C to about 120°C, from about 80°C to about 100°C, from about 120°C to about 180°C, or from about 140°C to about 160°C. In at least one example, the polymer may have a melting point ranging from about 70°C to about 120°C.

The polymers of the coatings herein may comprise one or more acid groups. Some or all of the acid groups may be neutralized. For example, at least about 20%, at least about 40%, at least about 60%, at least about 80%, or at least about 90% of the acid groups on the polymer may be neutralized. In some cases, from about 10% to about 100%, from about 20% to about 80%, from about 30% to about 70%, from about 40% to about 60%, from about 30% to about 50%, or from about 50% to about 70% of the acid groups on the polymer may be neutralized. The neutralization of the acid groups may assist water dispersion. In some examples, the acid groups may be over neutralized, e.g., the amount of neutralizing bases added to the polymers is above the stoichiometric quantity required for complete neutralization of the polymer.

The acid groups in the polymers may be neutralized by one or more neutralizing agents. Exemplary neutralizing agents include salts (e.g., ammonium salts or alkali metal salts such as sodium salts or potassium salts), organic amines, hydroxide salts (e.g., ammonium hydroxides or alkali metal hydroxides such as sodium hydroxide or potassium hydroxide). When ammonium hydroxide is used as the neutralizing agent, ammonia may be released on drying such that a minimal amount of salt is left in the coating. This may improve water resistance of the film. When alkali metal salts are used as the neutralizing agent, an ionomer may be formed with the polymer. This may improve the crystallinity of the film and the barrier properties of the coating.

The coatings herein may comprise from about 0.1% to 100% by weight of polymer(s), with respect to the total weight of the respective coating. For example, the polymer(s) may be present in the coating (as one layer or in multiple layers) in an amount ranging from about 10% to about 80%, from about 10% to about 70%, from about 10% to about 60%, from about 10% to about 50%, or from about 20% to about 40% by weight of the coating. In some examples, the polymer(s) may be present in the coatings in an amount of less than 10% by weight, e.g., less than 5% by weight of the coating. In some examples, the polymers may be present in the coatings in an amount of greater than 80% by weight, e.g., greater than 90% or greater than 95%, by weight of the coating.

In addition to, or as an alternative of, polymers, the coatings herein may comprise one or more polysaccharide materials. For example, the coatings may comprise cellulose. In some cases, the cellulose may be fibrillated, e.g., microfibrillated or nanofibrillated. The coatings herein may comprise from about 0.1% to 100% by weight of polysaccharide material(s), with respect to the total weight of the respective coating. For example, the polysaccharide material(s) may be present in the coating (as one layer or in multiple layers) in an amount ranging from about 10% to about 80%, from about 10% to about 70%, from about 10% to about 60%, from about 10% to about 50%, or from about 20% to about 40% by weight of the coating. In some examples, the polysaccharide material(s) may be present in the coating in an amount of less than 10%, e.g., less than 5% by weight of the coating. In some examples, the polysaccharide material(s) may be present in the coating in an amount of greater than 80% by weight, e.g., greater than 90% or greater than 95% by weight of the coating.

The coatings disclosed herein may comprise one or more minerals. In some examples, the mineral(s) may comprise or be derived from a natural or synthetic clay. In some examples, the mineral(s) may comprise a phyllosilicate mineral. The minerals may have a shape factor suitable for the coatings. As used herein, shape factor refers to a measure of an average value (on a weight average basis) of the ratio of mean particle diameter to particle thickness for a population of particles of varying size and shape. Shape factor may be measured using the electrical conductivity method and apparatus described in U.S. Patent No. 5,576,617. In this method, the electrical conductivity of a fully dispersed aqueous suspension of the particles is measured as they flow through an elongated tube. Measurements of the electrical conductivity are taken between (a) a pair of electrodes separated from one another along the longitudinal axis of the tube, and (b) a pair of electrodes separated from one another across the transverse width of the tube. The shape factor of the particulate material is determined from the difference between these two conductivity measurements. Higher shape factors generally describe more platy materials. The minerals may have a shape factor of at least about 10, at least about 20, at least about 40, at least about 60, at least about 80, at least about 90, at least about 100, at least about 125, at least about 150, or at least about 200. In some cases, the minerals may have a shape factor ranging from about 10 to about 200, e.g., from about 20 to about 200, from about 20 to about 100, from about 40 to about 100, from about 50 to about 80, from about 50 to about 60, or from about 40 to about 60.

Exemplary minerals that can be included in the coatings herein include, but are not limited to, kaolin, metakaolin, talc, mica, chlorite, pyrophyllite, serpentine, and combinations thereof. In some examples, a coating or a layer of a coating may comprise only one mineral, e.g., talc, kaolin, or mica. Alternatively, a coating or a layer of a coating may comprise a combination (e.g., a mixture) of two or more minerals. Different layers of a coating may comprise different minerals or combinations of minerals. For layers or coatings comprising mixtures of minerals, two or more minerals may be milled or ground together.

The coating(s) may comprise talc. The talc may be macrocrystalline talc, microcrystalline talc, or a combination thereof. The talc may be natural talc, synthetic talc, or a mixture thereof. Natural talc may comprise talc derived from a natural resource, e.g., natural talc deposits. Talc may comprise, for example, hydrated magnesium silicate of formula Si₄Mg₃O₁₀(OH)₂, e.g., arranged as a stack of laminae, and/or chlorite (hydrated magnesium aluminum silicate). Optionally, talc may be associated with other minerals, for example, dolomite.

The coating(s) may comprise kaolin and/or kaolinite. Kaolin may be used in a processed or unprocessed form, and may be derived from a natural source, e.g., a natural kaolin clay deposit. The kaolin may contain from about 50% to about 100% by weight of kaolinite (Al₂Si₂O₅(OH)₄), e.g., from about 50% to about 95%, from about 50% to about 90%, from about 70% to about 100%, from about 70% to about 90%, or from about 80% to about 100%, by weight of kaolin.

The minerals herein may be processed or unprocessed. In some examples, the mineral(s) are not treated or processed, e.g., remaining in the form of the natural solid, prior to incorporation into the coating(s). A mineral or combination of minerals may be processed prior to incorporation into the coating(s), e.g., by physical and/or chemical treatments. For example, the mineral(s) may be bleached, e.g., with a reductive bleaching agent such as sodium hydrosulfite. In some examples, the mineral(s) may be treated to remove impurities, e.g., by flocculation, flotation, or magnetic separation techniques. Further, for example, the mineral(s) may be calcined. In some cases, the mineral(s) may comprise calcined talc, calcined kaolin, or a combination thereof. In some cases, the mineral(s) may be partially calcined. For example, the mineral(s) may comprise partially calcined talc or partially calcined kaolin (e.g., metakaolin).

In some examples, the minerals may be processed by one or more comminution steps, e.g., grinding or milling. Light comminution of a coarse mineral may be used to give suitable delamination thereof. The comminution may use beads or granules of a plastic (e.g. nylon), sand or ceramic grinding or milling aid. The minerals may be treated by a known particle size classification procedure, e.g., screening and centrifuging (or both), to obtain particles having a desired particle size distribution.

The minerals may have a particle size distribution that is suitable for the coating(s). For example, the minerals may have a d₅₀ from about 0.1 µm to about 10 µm, e.g., from about 0.5 µm to about 7.5 µm, from about 0.5 µm to about 5 µm, from about 1.0 µm to about 3.5 µm, from greater than about 2.0 µm to about 3.5 µm, or from about 2.2 µm to about 3.5 µm. The minerals may have a d₉₅ of less than about 10 µm, e.g., less than about 8 µm, less than about 6 µm, or less than about 5 µm. The minerals may have a d₉₈ of less than about 20 µm, e.g., less than about 15 µm, less than about 10 µm, less than about 8 µm, less than about 6 µm, or less than about 5 µm.

The particle size distribution of the minerals described herein may be measured by sedimentation of minerals in a fully dispersed condition in an aqueous medium using a Sedigraph 5100 machine as supplied by Micromeritics Instruments Corporation, Norcross, Ga., USA. Such a machine may provide measurements and a plot of the cumulative percentage by weight of particles having a size, referred to as the "equivalent spherical diameter" (e.s.d), less than given e.s.d values. The mean particle size d₅₀ is the value determined in this way of the particle e.s.d at which there are 50% by weight of the particles which have an equivalent spherical diameter less than that d₅₀ value. The d₉₅ and d₉₈ are the values determined in this way of the particle e.s.d. at which there are 95% and 98% respectively by weight of the particles which have an equivalent spherical diameter less than that d₉₅ or d₉₈ value.

The minerals may be present in the coatings in an amount ranging from about 0.1% to about 100%, e.g., from about 10% to about 90%, from about 30% to about 90%, from about 40% to about 90%, from about 50% to about 90%, or from about 60% to about 90% by weight of the dry components of the coating. In one example, the amount of minerals in the coatings may be about 40% to about 60% by weight of the dry components of the coating. In another example, the amount of minerals in the coatings may be about 65%. In some examples, the amount of minerals present in the coatings may be less than 5%, e.g., less than 2%, less than 1%, or less than 0.1% by weight of the dry components of the coating.

The coatings may further comprise one or more additives, such as surfactants, adhesion promoters, diluents, cross-linkers, water retention aids, viscosity modifiers, thickeners, lubricity/calendaring aids, dispersants, wetting agents, antifoamers/defoamers, dry or wet pick improvement additives, dry or wet rub improvement and/or abrasion resistance additives, gloss-ink hold-out additives, optical brightening agents and/or fluorescent whitening agents, dyes, biocides/spoilage control agents, levelling and evening aids, grease and oil resistance additives, water resistance additives, pigments, and any combinations thereof.

Surfaces of the substrate may be covered by a coating comprising one or more layers of material(s). A surface of the substrate may be covered by a coating comprising 1, 2, 3, 4, 5, 6, 7, 8, 9, 10, or more layers. Some or all surfaces of the substrate may be partially or fully covered by a coating. In some examples, a substrate may have two surfaces, one surface covered by at least 2 or at least 3 coating layers and the other covered by at least 1 or at least 2 coating layers. In certain cases, one or more surfaces of the substrate are not covered by any coating.

A coating may comprise one or more layers continuously covering an article. Alternatively and additionally, a coating may comprise one or more layers discontinuously covering an article, e.g., providing partial or incomplete coverage of the surface. One or more layers of a coating may be devoid of minerals while other layers may comprise one or more minerals. In at least one example, the substrate may have a coating comprising one or more layers that does not comprise any mineral. In some examples, the coating(s) may comprise one or more layers that comprise one or more minerals. In some cases, the amount of mineral(s) in a coating or a layer of a coating may be from about 0.1% to about 100% by weight of the coating or layer, e.g., from about 0.1% to about 10%, from about 1% to about 20%, from about 10% to about 30%, from about 20% to about 40%, from about 30% to about 50%, from about 40% to about 60%, from about 50% to about 70%, from about 60% to about 80%, from about 70% to about 90%, or from about 80% to about 100% by weight of the total amount of the coating or the layer of the coating.

In some examples, a coating herein may comprise a first layer comprising a first polymer and a first mineral, and a second layer comprising a second polymer, which may be the same or different than the first polymer. In some cases, the second layer may comprise a second mineral, which may be the same or different than the first mineral. The amount of the second mineral in the second coating may be less than about 90% by weight, e.g., less than about 80%, less than about 60%, less than about 40%, less than about 20%, less than about 10%, or less than about 5%, or at least about 20%, or at least about 30%, or at least about 40%, or at least about 50%, by weight of the amount of the first mineral in the first coating. In some examples, the second layer does not comprise a mineral. The first layer may be an inner layer and the second layer may be an outer layer (relative to the inner layer) on the same surface of a substrate.

Alternatively, the first and second layers are on different surfaces of a substrate. For example, in the cases where the article is a container, the first layer may be included in a coating on the inner surface, and the second layer may be included in a coating on the outer surface of the container, each optionally with an additional layer or layers.

The coatings herein may comprise one or more pre-coat layers. The pre-coat layer(s) may be between the substrate surface (including, e.g., adjacent to the substrate surface) and an outermost coating layer that forms a surface of the article. The pre-coat layer(s) may be continuous, e.g., wherein the pre-coat layers completely cover the substrate surface. Alternatively, the pre-coat layer(s) may be discontinuous, e.g., providing incomplete coverage of the substrate surface. In some examples, the article may comprise a pre-coat layer in direct contact with a substrate surface. In these cases, the pre-coat layer may lie on the surface. Alternatively or additionally, at least a portion of the pre-coat layer may penetrate a distance into the thickness of a substrate, e.g., into from about 0.1% to 100%, e.g., from about 10% to 50%, from about 40% to about 80%, from about 50% to about 90%, or from about 60% to about 100% of the thickness of the substrate.

The pre-coat layer(s) may comprise one or more polymers, which may be different from, or the same as, the material(s) in other layers of the coating. Additionally or alternatively, the pre-coat layer(s) may comprise one or more polysaccharide materials, such as cellulose. The pre-coat layer(s) may further comprise one or more minerals, which may be different from or the same as the minerals in other layers of the coating. In one example, the pre-coat layer may comprise a styrene polymer (e.g., styrene butadiene copolymer) and kaolin, e.g., 50% by weight of kaolin and 50% by weight of styrene butadiene, by weight of the pre-coat layer.

The coatings herein may have a desired dry coat weight, e.g., to provide a sufficient barrier. In some examples, the coatings may have a dry coat weight from about 0.1 grams per square meter (g/m²) to about 3.0 g/m², e.g., from about 0.5 g/m² to about 3.0 g/m², from about 0.5 g/m² to about 2.0 g/m², from about 0.5 g/m² to about 1.0 g/m², from about 1.0 g/m² to about 3.0 g/m², or from about 1.0 g/m² to about 2.0 g/m². In some cases, the coatings herein may have a dry coat weight of at least about 0.1 g/m², at least about 0.5 g/m², at least about 1.0 g/m²; and up to about 3.0 g/m² or about 2.0 g/m² or about 1.0 g/m². In some cases, the coatings herein may have a dry coat weight of about 0.5 g/m², about 0.8 g/m², about 1.0 g/m², about 1.2 g/m², about 1.4 g/m², about 1.6 g/m², about 1.8 g/m², about 2.0 g/m², about 2.2 g/m², about 2.4 g/m², about 2.6 g/m², about 2.8 g/m², or about 3.0 g/m². In some examples, such coatings may only partially cover a surface of a substrate. For example, the coatings may be discontinuous. In other examples, the coatings may have a dry coat weight ranging from about 1.0 g/m² to about 10.0 g/m², e.g., from about 1.0 g/m² to about 9.0 g/m², from about 3.0 g/m² to about 8.0 g/m², from about 3.0 g/m² to about 6.0 g/m², from about 5.0 g/m² to about 8.0 g/m², or from about 4.0 g/m² to about 6.0 g/m². In some cases, the coatings herein may have a dry coat weight of at least about 1.0 g/m² or at least about 3.0 g/m² or at least about 4.0 g/m² or at least about 5.0 g/m²; and up to about 6.0 g/m² or about 8.0 g/m² or about 9.0 g/m² or about 10.0 g/m². In some examples, such coatings may cover at least a portion, e.g., the entirety, of a surface of a substrate. Different surfaces of a substrate may have different amounts of coatings (different dry coat weights).

The coatings herein may have a desired average thickness. For example, a coating may have a thickness ranging from about 0.1 µm to about 10.0 µm, e.g. from about 1.0 µm to about 10.0 µm, from about 2.0 µm to about 9.0 µm, from about 4.0 µm to about 8.0 µm, or from about 5.0 µm to about 7.0 µm.

The coatings may have characteristics that provide barriers, e.g., aqueous and/or gas barriers for the coated substrates. In these cases, the coatings may reduce or prevent the permeation of gases, vapors, and/or liquids through the coatings. For example, the coatings may reduce or prevent the permeation of an aqueous solution (e.g., water, water-based foods, water-based beverages) or moisture through the coatings.

The coatings herein may have a desired water absorption capability. The water absorption capability of the coatings may be measured by Cobb values, which may refer to the water absorption (in weight of water per unit area) of a sample. In some examples, the Cobb values of the coatings may be determined by the following procedure: 1) weigh a sample; 2) place the sample in a container; 3) fill the container with water; 4) wait for a period of time, e.g., 30 minutes; 5) pour off water; and 6) weigh the sample. The Cobb value is then calculated by subtracting the initial weight of the sample from the final weight of the sample and then dividing by the area of the sample covered by the water. In some examples, the coatings may have a Cobb value of less than about 30 g/m², less than about 25 g/m², less than about 20 g/m², less than about 10 g/m², less than about 5 g/m², or less than about 2 g/m². In some cases, the Cobb value of the coatings may be measured according to the TAPPI T441 standard duration 1 minute.

The coatings may be configured to serve as an aqueous barrier within certain temperature ranges. For example, the coatings of the article may be configured to serve as a barrier against warm, hot, and/or room temperature substances, e.g., at a temperature ranging from about 10°C to about 100°C, e.g., from about 20°C to about 100°C, from about 30°C to about 100°C, from about 50°C to about 100°C, from about 70°C to about 100°C, or from about 80°C to about 100°C. In such cases, the coatings may provide a suitable barrier against substances, e.g., liquids, contained inside the article at such temperatures.

The coated substrates and articles comprising such coated substrates herein may be capable of being recycled. In the cases where the substrates comprise paper, the articles may be partially or fully repulped. In some examples, from about 50% to about 100%, e.g., from about 60% to about 100%, from about 70% to about 100%, from about 80% to about 100%, from about 90% to about 100%, from about 85% to about 95%, from about 90% to about 99%, at least about 85%, at least about 87%, at least about 90%, at least about 95%, or at least about 98% of the weight of an article disclosed herein may be recycled (e.g., repulped). The percentage of the article that can be recycled or repulped may be tested by methods described in Voluntary Standard For Repulping and Recycling Corrugated Fiberboard Treated to Improve Its Performance in the Presence of Water and Water Vapor (Rev. August 15, 2013) by the Fiber Box Association. In some examples, the percentage of the article that can be repulped may be measured using an AMC Maelstom repulper. In such cases, 110 grams of the article, cut into 1"×1" squares, may be added to the repulper containing 2895 grams of water (pH of 6.5±0.5, 50° C.), soaked for 15 minutes, and then repulped for 30 minutes. A 300 mL aliquot of the repulped slurry may then be screened through a Vibrating Flat Screen (0.006" slot size). Rejects (caught by the screen) and fiber accepts may be collected, dried and weighed. The percentage of accepts may be calculated based on the weights of accepts and rejects, with 100% being complete repulpability.

The coatings and articles herein may be prepared by applying one or more dispersions, e.g., an aqueous dispersion or a dispersion comprising an organic solvent, to a substrate. For example, methods of making articles according to the present disclosure may comprise forming one or more coatings on one or more surfaces of a substrate, e.g., by applying a dispersion to each surface. The dispersion(s) may have different chemical compositions and be applied to one or more surfaces of the substrate to form one or more layers.

The minerals may be in suspensions before incorporation into the coatings. The dispersions may be prepared by combining (e.g., mixing) coating materials, e.g., polymers, minerals, and/or other additives with water or an aqueous medium, or an organic solvent. The dispersions may have a viscosity suitable to be applied by a coating machine. The viscosity of the dispersions may range from about 100 centipoise (cP) to about 2500 cP. from about 100 cP to about 500 cP, from about 500 cP to about 1000 cP, from about 1000 cP to about 2000 cP, or from about 1500 cP to about 2500 cP. In some examples, the viscosity of the dispersions may be Brookfield viscosity measured using an LV DV-E viscometer and spindle number 3, at 23° C and 100 rpm.

The dispersions may be suspensions or dispersions that comprise solid components. The dispersions may comprise solid components at an amount suitable for being applied by a coating machine. For example, the dispersions may comprise solid components ranging from about 30% to about 70%, from about 35% to about 65%, from about 40% to about 60%, or from about 45% to about 55% by weight of the total dispersion.

The aqueous or non-aqueous suspensions containing the minerals may have solids content ranging from about 40% to about 90%, from about 50% to about 80%, from about 50% to about 70%, from about 60% to about 70%, or from about 50% to about 60% by weight of the suspensions.

In some examples, the methods may comprise applying to a first surface a first aqueous dispersion to form a first layer, a second aqueous dispersion to form a second layer, and a third aqueous dispersion to form a third layer. The first aqueous dispersion may be applied before the second aqueous dispersion. In these cases, when the first and second aqueous dispersions are applied to the same surface, the first aqueous dispersion may form an inner layer and the second aqueous dispersion may form an outer layer. In some cases, the third layer may be a pre-coat layer. In these cases, the third aqueous dispersion may be applied before the first and second aqueous dispersions on the same surface. The methods herein may further comprise forming a discontinuous layer on a second surface of the substrate by applying a dispersion comprising a second polymer to portions of the second surface, wherein the second polymer is the same or different from the first polymer. The dispersion comprising the second polymer may be aqueous or non-aqueous, e.g., a dispersion comprising an organic solvent.

The methods for making the articles may comprise one or more of the following steps: forming a coating on a first surface of a substrate by applying an aqueous dispersion comprising a first polymer to the first surface; and forming a discontinuous layer on a second surface of the substrate by applying a dispersion comprising a second polymer to portions of the second surface. The coating of the first surface may be capable of forming a heat-seal with the discontinuous layer on the second surface. The aqueous dispersion applied to the first surface comprises a mineral. In these cases, forming the coating on the first surface may comprise applying a first aqueous dispersion comprising the first polymer and the mineral to form an inner layer; and applying to the inner layer a second aqueous dispersion comprising the first polymer without the mineral to form an outer layer. As used herein, an inner layer of a surface refers to a layer that is closer to the substrate surface compared to an outer layer of a coating. In some cases, forming the coating on the first surface may further comprise applying one or more pre-coat layer(s) before applying the first and second aqueous dispersions. The pre-coat layer(s) may be between the surface of the substrate and another layer (e.g., inner layer) of the coating. In some examples, the pre-coat layer(s) may comprise a polymer and a mineral.

The dispersions may be applied to the substrate by various techniques, for example, by spray coating, curtain coating, blade coating, coating with a roll coater or a gravure coater, brush coating, dipping, flexo coating, film coating, or rod coating. In some examples, the applied dispersions may be dried (e.g., by heat) to form solid coatings once applied to the substrate. In some cases, the dispersions may be applied to the substrate topically.

The process may be performed by a coating machine. Such coating machine may comprise an applicator for applying the dispersions described herein to a substrate and optionally a metering device for ensuring that a correct level of dispersions is applied. The coatings may be added by a coating head at a coating station. A coater that is applying coating on each side of the paper may have certain number of coating heads, depending on the number of coating layers applied on each side. Some coating heads coat only one side at a time. Other coating heads, e.g., those on roll coaters (e.g., film presses, gate rolls, and size presses) may be capable of coating two sides in one pass.

Exemplary coating machines that may be used for making the articles include air knife coaters, blade coaters, rod coaters, bar coaters, multi-head coaters, roll coaters, roll or blade coaters, cast coaters, laboratory coaters, gravure coaters, kisscoaters, liquid application systems, reverse roll coaters, curtain coaters, and spray coaters. In some examples, the aqueous dispersions may be applied to a substrate by printing, e.g., by offset printing, flexographic printing, or rotogravure printing. Such printing process may allow the coatings to be applied to specified areas on the substrate.

In some examples, the methods herein may comprise making containers using the articles (e.g., paper or other sheet materials) with the coatings disclosed herein. The containers may be made on automated manufacturing machines. For example, paper with the coatings herein may be used to make paper cups on high-speed cup converting lines. When processed on such machines, the coatings may inhibit or prevent blocking or interruption of the operation of the machine. The term "blocking" generally refers to when a coated substrate sticks to itself, to another substrate, to portions of equipment, and/or other surfaces, e.g., during manufacturing. Blocking may inhibit or even prevent production from proceeding. For example, blocking may cause coated paper or other coated substrates to roll up on itself and/or on parts of the machinery. For example, the coatings may result in little to no sticking to various parts of the machine. The present disclosure may provide for a configuration during manufacturing that prevents or otherwise minimizes blocking, e.g., adhesion to the machinery and/or other substrates. For example, the coated articles disclosed herein may advance through a papermaking/conversion/printing process in such a way that a surface of the coated article (e.g., the outermost surface) contacts surfaces of the machinery and/or another substrate without adhesion, or with only limited adhesion. The coated substrates herein may achieve a non-blocking effect while still providing sufficiently strong heat seal.

The methods of making the articles herein may comprise adhering a portion of a coating with a portion of another coating. The two coatings may be on different surfaces of the same substrate or on different substrates. In other cases, the methods may comprise adhering multiple portion of a coating. The adhering may be performed by heat-sealing. For example, the article may be a cup comprising a first substrate that forms the side of the cup and a second substrate that forms the base of the cup. The cup side and base may be connected by heat-sealing coatings on the two substrates, which may provide a barrier against liquid or moisture reaching the substrates, including along seams or junctures of the cup.

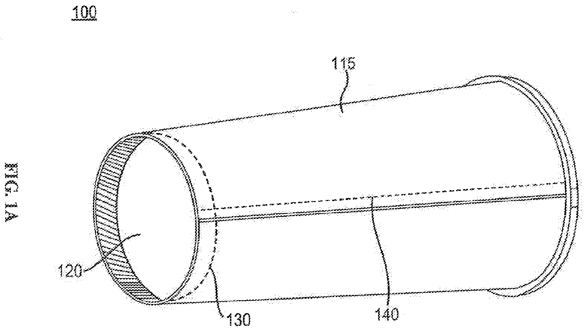

An exemplary article **100** in accordance with some aspects of the present disclosure, a cup suitable for containing a beverage, is shown in **FIGS. 1A-1C****.** **FIG. 1A** shows a perspective view of the outside of the cup **100** formed from two coated substrates - a coated bottom substrate **120** and a coated side substrate **115**. Both substrates may comprise paper, for example, with coatings on the inner and outer surfaces of the paper. The cup **100** has a first seam **130** where the coated bottom substrate **120** joins the coated side substrate **115**, and a second seam **140** where ends of the coated side substrate **115** are joined together.

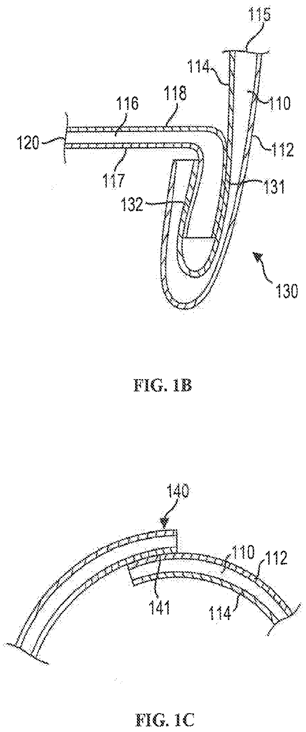

**FIG. 1B** shows cross-sectional view of the first seam **130** joining portions of the coated bottom substrate **120** and the coated side substrate **115**. As shown, the coated bottom substrate **120** of the cup **100** is formed by substrate **116** having first coating **117** that forms the outer surface of the coated bottom substrate **120** of the cup **100**, and a second coating **118** that forms the inner surface of the coated bottom substrate **120** of the cup **100**. The coated side substrate **115** of the cup **100** is formed by substrate **110** having first coating **112** that forms the outer side surface of the cup **100**, and a second coating **114** that forms the inner side surface of the coated side substrate **115** of cup 100. The various coatings **117**, **118**, **112**, **114** may comprise the same or different materials as described herein. The coating **114** on the inner side surface of substrate **110** is heat sealed with 1) the coating **118** on the inner surface of the bottom substrate **116** at heat-sealing region **131** and 2) the coating **117** on the outer surface of the bottom substrate **116** at heat-sealing region **132.** **FIG. 1C** shows a cross-sectional view of the second seam **141** joining portions of the coated side substrate **115**. The coatings **114**, **112** on inner and outer surfaces, respectively, of side substrate **110** are heat-sealed at ends of the side substrate **110**.

Heat-sealing may be performed by applying (e.g., at a pressure) heat on the coatings with one or more polymers, in which the temperature is at or above the melting point of the one or more polymers. In some examples, the heat-sealing may be performed by a heat sealer, e.g., a heat sealer on a paper cup-making machine. The sealed articles may exhibit a desired seal strength, achieving proper fiber tear results.

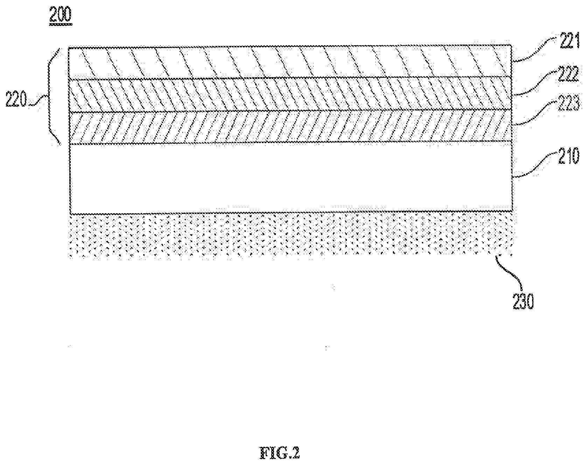

**FIG. 2** shows an exemplary configuration of coatings or coating system that may be used in an article such as cup **100**, according to some aspects of the present disclosure. Shown in cross-section in **FIG. 2**, coating system **200** comprises a substrate **210** with two surfaces. The first surface is covered by coating **220**. Coating **220** comprises three layers (layers **221**, **222**, and **223**). Layer **221** may be a heat-seal layer (e.g., comprising heat-sealable material(s)), layer **222** may be a water barrier layer (e.g., providing resistance to water and/or other aqueous materials or moisture optionally in combination with another layer or layers), and layer **223** may be a pre-coat layer as described herein. For example, layer 221 may comprise one or more heat-sealable polymers (with or without mineral(s)), layer 222 may comprise at least one polymer and at least one mineral, and layer 223 may comprise at least one polymer and/or polysaccharide material, optionally with one or more minerals.

Still referring to **FIG. 2**, the second surface of the substrate **210** is covered by coating **230**. The coating **230** may comprise only one layer, for example, a heat-seal layer (e.g., comprising heat-sealable material(s). For example, layer **230** may comprise one or more heat-sealable polymers (with or without mineral(s)). In some examples, layer **230** may be a discontinuous layer, e.g., such that the material of the coating does not completely cover the paper substrate. In cases where the substrate **210** is designed to be heat-sealed to itself, the outermost layer **221** and the single layer of coating **230** can be heat-sealed together.

In at least one example, both heat-seal layers **221** and **230** may comprise the same heat-sealable polymer, e.g., ethylene acrylic acid, or a derivative thereof, optionally with one or more additives such as viscosity controlling agents, pH controlling agents, and/or bacteria controlling agents. Layers **230** and **221** may be configured to avoid blocking each other. For example, the discontinuous layer 230 may inhibit blocking that could otherwise occur. In some examples, both layers **221** and **230** may comprise the same material(s), such as ethylene acrylic acid without any mineral content, or ethylene acrylic acid with at least one mineral. In other cases, layer **222** may comprise a polymer and a mineral, and layer **230** may comprise a polymer without any mineral. In at least one example, layer **222** may comprise about 65% (by weight) high aspect ratio talc and about 35% (by weight) of ethylene acrylic acid. The pre-coat layer **223** may comprise a polymer, such as styrene butadiene latex, or a polysaccharide, such as microfibrillated or nanofibrillated cellulose. In some examples, the pre-coat layer **223** may further comprise a mineral, e.g., kaolin. In at least one example, a pre-coat layer may comprise about 50% (by weight) of kaolin, and about 50% (by weight) of styrene butadiene latex. In at least one example, layer 230 comprises ethylene acrylic acid or polyetherimide. It is understood that these materials and amounts of materials are exemplary only, and other combinations of materials and layers are encompassed by the disclosure herein.

The coating system example shown in **FIG. 2** may be useful for containing liquids at temperatures at room temperature (about 20°C) and above, including warm and hot liquids. Since condensation typically does not form at temperatures in this range, the outer surface of the cup need not include as complete or robust coatings as compared to containers for cold substances. This configuration may allow for lower materials/manufacturing cost and greater recyclability and repulpability of the substrate.

While **FIGS. 1A-1C** and **2** illustrate examples of articles and coating systems, it is understood that the present disclosure includes additional articles and coating systems.

### EXAMPLES

A talc slurry was prepared by initially adding talc to an aqueous medium under high shear (about 2000 rpm) and continuing high shear dispersion at about 2500 rpm for 20 to 30 minutes. The aqueous medium comprised enough water to obtain a final solids content of about 48 wt%. The pH of the aqueous medium was adjusted to 9.5 using NaOH. The aqueous medium also comprised approximately 0.3% polyacrylate dispersant (dry dispersant based on the dry weight of talc). The final viscosity was approximately 60 mPa.s Brookfield 100 rpm Spindle 5. A first coating composition was prepared by mixing a portion of the talc slurry with an aqueous dispersion of an ethylene acrylic acid polymer binder (Michelman MP4990R) to obtain a composition with talc and polymer having a weight ratio of 90:10 dry parts of polymer: dry parts of talc. A second coating composition was prepared as well of only the MP4990R polymer binder (weight ratio of polymer:talc of 100:0).

Test cup-stock boards (CTMP core with outer layers of chemical pulp) were prepared and evaluated for blocking and heat seal effectiveness, as described below. Five test samples were prepared and evaluated for each of the blocking and heat seal results shown in Tables 3 and 4. The results in Tables 3 and 4 are the modal results from the five tests run for each.

Each cup-stock board was pre-coated on only one side at a coat weight of 6 - 8 gsm with a pre-coating composition comprising 15 pph styrene butadiene (SB) latex and kaolin having at least 75% of particles smaller than 2 um and a shape factor of around 20. The other side of the cup-stock board was left uncoated prior to the application, as applicable, of the second coating composition. For each test, various coating weights of the first and second coating compositions (as shown in Tables 3 and 4) were coated onto either the pre-coated side or the uncoated side of the cup-stock boards, as applicable. The coatings were applied using a wire wound bar (K Bar) selected to give a desired coatweight. The coating composition was placed in front of the bar on a non-absorbent substrate and the bar was drawn down the substrate, coating it evenly. Hot air was then applied to the surface to dry the coating. The coating weight (gsm) was determined by weighing a sample of the coated paper and comparing it to the weight of a sample of uncoated paper. Both coated and uncoated paper were conditioned at 23C and 50% R.H.

For both the heat sealing and blocking evaluation, a hot bar heat sealer HM-91 with an Arctics controller (advanced real time impulse control system) was employed. Both Jaws of the heat sealer were heated and solenoid operated to provide a constant force, jaws were covered with PTFE coated glass cloth, sealing width was 6mm.

Test samples consist of two pieces of coated board, the coated sides under evaluation (faces) which were brought together (face to face). Samples were not preheated, the sample is placed between the open jaws, jaws come together at a set temperature and for a set time, after the jaws open the samples are removed and samples are left to cool at room temperature for 30 minutes before the seal between the two coated boards is broken during the subsequent evaluation. Evaluation and ranking of the seal quality is carried out by observing the seal failure.

### Heat seal testing

The test samples were heat sealed at a temperature of 130C +/-1C for 0.2secs. The criteria for evaluation of the seal strength are shown below in Table 1. This is an evaluation of seal quality with better seals achieving a higher value. Modal results are shown in Table 3 below.

**TABLE 1**

| | |
|---|---|
| 0 | NO SEAL |
| 1 | WEAK ADHESION |
| 2 | ADHERED BUT NO TEAR |
| 3 | >1% FIBRE TEAR to <50% FIBRE TEAR |
| 4 | ≥50% FIBRE TEAR to <100%FIBRE TEAR |
| 5 | 100% FIBRE TEAR |

### Blocking Test

The test samples were subjected to a temperature of 47C +/- 3C for 10 secs. The criteria for evaluation of blocking are shown below in Table 2. This is an evaluation of blocking, under these conditions, samples should not block/seal so poorer seals have higher values. Modal Results are shown in Table 4 below.

**TABLE 2**

| | |
|---|---|
| 0 | ≥80% FIBRE TEAR |
| 1 | >1% to <80% FIBRE TEAR |
| 2 | STRONG ADHESION COATING PICK |
| 3 | MEDIUM ADHESION COATING PICK |
| 4 | WEAK ADHESION NO COATING PICK |
| 5 | NO OR VERY WEAK ADHESION |

**TABLE 3**

| Heat Seal Evaluation Results | | |
|---|---|---|
| On Uncoated Side | On Pre-coated Side | |
| Second Coating Composition (100:0 polymer:talc) | Second Coating Composition (100:0 polymer:talc) | First Coating Composition (90:10 polymer:talc) |
| Coat Weight, gsm | Coat Weight of 4 - 6 gsm | Coat Weight of 4 - 6 gsm |
| | Heat Seal Evaluation Modal Results | |
| 0 | **2** | **2** |
| 2.5 - 3.5 | **5** | **5** |
| 7 - 8.5 | **5** | **5** |
| 12.5 - 13.5 | **5** | **5** |
| 19.5 - 22 | **5** | **5** |

**TABLE 4**

| Blocking Evaluation Results | | |
|---|---|---|
| On Uncoated Side | On Pre-coated Side | |
| Second Coating Composition (100:0 polymer:talc) | Second Coating Composition (100:0 polymer:talc) | First Coating Composition (90:10 polymer:talc) |
| Coat Weight, gsm | Coat Weight of 4 - 6 gsm | Coat Weight of 4 - 6 gsm |
| | Blocking Evaluation Modal Results | |
| 0 | **5** | **5** |
| 2.5 - 3.5 | **3** | **3** |
| 7 - 8.5 | **2** | **2** |
| 12.5 - 13.5 | **2** | **1** |
| 19.5 - 22 | **1** | **1** |

The coated articles disclosed herein may include or be used for making a variety of products, e.g., products in which water resistance, heat resistance, grease resistance, and/or heat sealability are desired. Exemplary products include cups, plates, bowls, food containers such as food (e.g., sandwich) wraps, butcher wraps, gable top cartons, folding cartons, paper pouches, molded paper products, butter/margarine wraps, pet food boxes and sacks, multiwall paper sacks, lawn refuse bags, diapers, and composite materials.

## Claims

1. An article comprising:
at least one substrate having a first surface and a second surface;
a first polymer that is water-dispersible and is selected from (i) styrene polymer, (ii) polymers of ethylene monomer and an unsaturated carboxylic acid monomer, (iii) polyethylene terephthalate, any derivatives thereof, any copolymers thereof, and any combinations thereof, covering the first surface of the at least one substrate to form a coating, wherein the coating of the first surface further comprises a mineral, wherein the mineral comprises a phyllosilicate mineral; and
a second polymer partially covering the second surface of the at least one substrate to form a discontinuous layer wherein portions of the second surface of the substrate remain uncovered, the second polymer being the same or different from the first polymer;
wherein the coating of the first surface is capable of forming a heat-seal with the discontinuous layer on the second surface, optionally wherein the coating comprises from 10% to 80% the first polymer by weight of the coating.

2. The article of claim 1, wherein at least one of the first polymer or the second polymer comprises a copolymer formed from at least two different monomers, wherein the at least two different monomers may include ethylene and an unsaturated carboxylic acid monomer, and optionally wherein the unsaturated carboxylic acid monomer is chosen from acrylic acid or methacrylic acid.

3. The article of any one of the preceding claims, wherein the second polymer comprises polyetherimide or a derivative thereof, and/or wherein a dry coat weight of the second polymer on the second surface ranges from 0.1 g/m² to 3.0 g/m², and/or wherein a dry coat weight of the coating on the first surface ranges from 1.0 g/m² to 9.0 g/m².

4. The article of any one of the preceding claims, wherein the phyllosilicate mineral comprises talc, kaolin, mica, or a combination thereof.

5. The article of any one of claims 1 to 4, wherein the coating of the first surface comprises:
an inner layer comprising a third polymer and the mineral, wherein the third polymer is the same as or different than the first polymer; and
an outer layer comprising the first polymer without the mineral.

6. The article of any one of the preceding claims, wherein the coating of the first surface further comprises a pre-coat layer between the inner layer and the first surface of the at least one substrate, the pre-coat layer comprising cellulose or a third polymer, optionally wherein the pre-coat layer further comprises a mineral.

7. The article of claim 5 or 6, wherein the third polymer comprises a styrene-containing copolymer.

8. The article of any one of the preceding claims, wherein the discontinuous layer of the second surface further comprises a mineral, and/or wherein the at least one substrate comprises paper.

9. The article of any one of the preceding claims, wherein (i) the article is a heat-sealed container, the first surface being an inner surface of the container, and the second surface being an outer surface of the container, or (ii) wherein the article is a heat-sealed container, the first surface of the at least one substrate being an outer surface of the container, and the second surface of the at least one substrate being an inner surface of the container, further wherein in (i) or (ii) the heat-sealed container may be configured to hold a liquid at a temperature ranging from 10°C to 100°C.

10. A method for making an article, the method comprising:
forming a coating on a first surface of a substrate by applying an aqueous dispersion comprising a first polymer to the first surface wherein the first polymer is selected from (i) styrene polymer, (ii) polymers of ethylene monomer and an unsaturated carboxylic acid monomer, (iii) polyethylene terephthalate, any derivatives thereof, any copolymers thereof, and any combinations thereof and wherein the aqueous dispersion applied to the first surface further comprises a mineral, wherein the mineral comprises a phyllosilicate mineral; and
forming a discontinuous layer on a second surface of the substrate wherein portions of the second surface of the substrate remain uncovered by applying a dispersion comprising a second polymer to portions of the second surface, wherein the second polymer is the same or different from the first polymer;
wherein the coating of the first surface is capable of forming a heat-seal with the discontinuous layer on the second surface, optionally wherein the coating comprises from 10% to 80% the first polymer by weight of the coating.

11. The method of claim 10, wherein at least one of the first polymer or the second polymer is formed from at least two different monomers, wherein the at least two different monomers may include ethylene and an unsaturated carboxylic acid monomer, and/or wherein a dry coat weight of the second polymer on the second surface may range from 0.1 g/m² to 3.0 g/m².

12. The method of any one of claims 10-11, wherein the mineral comprises talc, kaolin, mica, or a combination thereof.

13. The method of any one of claims 10-12, wherein forming the coating on the first surface comprises:
applying a first aqueous dispersion comprising the first polymer and the mineral to form an inner layer; and
applying to the inner layer a second aqueous dispersion comprising the first polymer without the mineral to form an outer layer, wherein forming the coating on the first surface may further comprise:
before applying the first aqueous dispersion, applying a third aqueous dispersion comprising a third polymer different from the first polymer to form a pre-coat layer, such that the pre-coat layer is between the first surface of the substrate and the inner layer, and optionally wherein the third polymer comprises cellulose or a styrene-containing copolymer, or wherein the third aqueous dispersion further comprises a mineral.

14. The method of any one of claims 10-13, wherein the aqueous dispersion applied to the second surface comprises an organic solvent, and/or wherein the dispersion applied to the second surface of the substrate further comprises a mineral, and/or wherein the substrate comprises paper, and/or further comprising heat-sealing a portion of the coating to a portion of the discontinuous layer.

## Patentansprüche

1. Artikel, umfassend:
mindestens ein Substrat mit einer ersten Oberfläche und einer zweiten Oberfläche;
ein erstes Polymer, das wasserdispergierbar ist und aus (i) Styrolpolymer, (ii) Polymeren von Ethylenmonomer und einem ungesättigten Carbonsäuremonomer, (iii) Polyethylenterephthalat, beliebigen Derivaten davon, beliebigen Copolymeren davon und beliebigen Kombinationen davon ausgewählt ist, das die erste Oberfläche des mindestens einen Substrats bedeckt, um eine Beschichtung zu bilden, wobei die Beschichtung der ersten Oberfläche ferner ein Mineral umfasst, wobei das Mineral ein Phyllosilicat-Mineral umfasst; und
ein zweites Polymer, das teilweise die zweite Oberfläche des mindestens einen Substrats bedeckt, um eine diskontinuierliche Schicht zu bilden, wobei Teile der zweiten Oberfläche des Substrats unbedeckt bleiben, wobei das zweite Polymer gleich oder verschieden von dem ersten Polymer ist;
wobei die Beschichtung der ersten Oberfläche in der Lage ist, eine Heißsiegelung mit der diskontinuierlichen Schicht auf der zweiten Oberfläche zu bilden, wobei optional die Beschichtung 10 bis 80 Gew.-% des ersten Polymers der Beschichtung umfasst.

2. Artikel nach Anspruch 1, wobei mindestens eines des ersten Polymers oder des zweiten Polymers ein Copolymer umfasst, das aus mindestens zwei unterschiedlichen Monomeren gebildet ist, wobei die mindestens zwei unterschiedlichen Monomere Ethylen und ein ungesättigtes Carbonsäuremonomer beinhalten können, und wobei optional das ungesättigte Carbonsäuremonomer aus Acrylsäure oder Methacrylsäure gewählt ist.

3. Artikel nach einem der vorhergehenden Ansprüche, wobei das zweite Polymer Polyetherimid oder ein Derivat davon umfasst und/oder wobei ein Trockenbeschichtungsgewicht des zweiten Polymers auf der zweiten Oberfläche im Bereich von 0,1 g/m² bis 3,0 g/m² liegt und/oder wobei ein Trockenbeschichtungsgewicht der Beschichtung auf der ersten Oberfläche im Bereich von 1,0 g/m² bis 9,0 g/m² liegt.

4. Artikel nach einem der vorhergehenden Ansprüche, wobei das Phyllosilicat-Mineral Talk, Kaolin, Glimmer oder eine Kombination davon umfasst.

5. Artikel nach einem der Ansprüche 1 bis 4, wobei die Beschichtung der ersten Oberfläche umfasst:
eine Innenschicht, die ein drittes Polymer und das Mineral umfasst, wobei das dritte Polymer dasselbe wie das erste Polymer oder davon verschieden ist; und
eine Außenschicht, die das erste Polymer ohne das Mineral umfasst.

6. Artikel nach einem der vorhergehenden Ansprüche, wobei die Beschichtung der ersten Oberfläche ferner eine Vorbeschichtungsschicht zwischen der Innenschicht und der ersten Oberfläche des mindestens einen Substrats umfasst, wobei die Vorbeschichtungsschicht Cellulose oder ein drittes Polymer umfasst, wobei die Vorbeschichtung optional ferner ein Mineral umfasst.

7. Artikel nach Anspruch 5 oder 6, wobei das dritte Polymer ein styrolhaltiges Copolymer umfasst.

8. Artikel nach einem der vorhergehenden Ansprüche, wobei die diskontinuierliche Schicht der zweiten Oberfläche ferner ein Mineral umfasst und/oder wobei das mindestens eine Substrat Papier umfasst.

9. Artikel nach einem der vorhergehenden Ansprüche, wobei (i) der Artikel ein heißversiegelter Behälter ist, wobei die erste Oberfläche eine innere Oberfläche des Behälters ist und die zweite Oberfläche eine äußere Oberfläche des Behälters ist, oder (ii) wobei der Artikel ein heißversiegelter Behälter ist, wobei die erste Oberfläche des mindestens einen Substrats eine äußere Oberfläche des Behälters ist und die zweite Oberfläche des mindestens einen Substrats eine innere Oberfläche des Behälters ist, wobei ferner in (i) oder (ii) der heißversiegelte Behälter dazu konfiguriert sein kann, eine Flüssigkeit bei einer Temperatur im Bereich von 10 °C bis 100 °C zu halten.

10. Verfahren zum Herstellen eines Artikels, wobei das Verfahren umfasst:
Bilden einer Beschichtung auf einer ersten Oberfläche eines Substrats durch Auftragen einer wässrigen Dispersion, die ein erstes Polymer umfasst, auf die erste Oberfläche, wobei das erste Polymer aus (i) Styrolpolymer, (ii) Polymeren von Ethylenmonomer und einem ungesättigten Carbonsäuremonomer, (iii) Polyethylenterephthalat, beliebigen Derivaten davon, beliebigen Copolymeren davon und beliebigen Kombinationen davon ausgewählt ist, und wobei die auf die erste Oberfläche aufgebrachte wässrige Dispersion ferner ein Mineral umfasst, wobei das Mineral ein Phyllosilicat-Mineral umfasst; und Bilden einer diskontinuierlichen Schicht auf einer zweiten Oberfläche des Substrats, wobei Teile der zweiten Oberfläche des Substrats unbedeckt bleiben, durch Aufbringen einer Dispersion, die ein zweites Polymer umfasst, auf Teile der zweiten Oberfläche, wobei das zweite Polymer gleich oder verschieden von dem ersten Polymer ist;
wobei die Beschichtung der ersten Oberfläche in der Lage ist, eine Heißsiegelung mit der diskontinuierlichen Schicht auf der zweiten Oberfläche zu bilden, wobei optional die Beschichtung 10 bis 80 Gew.-% des ersten Polymers der Beschichtung umfasst.

11. Verfahren nach Anspruch 10, wobei mindestens eines des ersten Polymers oder des zweiten Polymers aus mindestens zwei unterschiedlichen Monomeren gebildet wird, wobei die mindestens zwei unterschiedlichen Monomere Ethylen und ein ungesättigtes Carbonsäuremonomer beinhalten können, und/oder wobei ein Trockenbeschichtungsgewicht des zweiten Polymers auf der zweiten Oberfläche im Bereich von 0,1 g/m² bis 3,0 g/m² liegen kann.

12. Verfahren nach einem der Ansprüche 10-11, wobei das Mineral Talk, Kaolin, Glimmer oder eine Kombination davon umfasst.

13. Verfahren nach einem der Ansprüche 10-12, wobei das Bilden der Beschichtung auf der ersten Oberfläche umfasst:
Aufbringen einer ersten wässrigen Dispersion, die das erste Polymer und das Mineral umfasst, um eine Innenschicht zu bilden; und
Aufbringen einer zweiten wässrigen Dispersion, die das erste Polymer ohne das Mineral umfasst, auf die Innenschicht, um eine Außenschicht zu bilden, wobei das Bilden der Beschichtung auf der ersten Oberfläche ferner umfassen kann:
Aufbringen einer dritten wässrigen Dispersion, die ein drittes Polymer umfasst, das sich von dem ersten Polymer unterscheidet, vor dem Aufbringen der ersten wässrigen Dispersion, um eine Vorbeschichtungsschicht zu bilden, so dass sich die Vorbeschichtungsschicht zwischen der ersten Oberfläche des Substrats und der Innenschicht befindet, und wobei optional das dritte Polymer Cellulose oder ein styrolhaltiges Copolymer umfasst oder wobei die dritte wässrige Dispersion ferner ein Mineral umfasst.

14. Verfahren nach einem der Ansprüche 10-13, wobei die auf die zweite Oberfläche aufgebrachte wässrige Dispersion ein organisches Lösungsmittel umfasst und/oder wobei die auf die zweite Oberfläche des Substrats aufgebrachte Dispersion ferner ein Mineral umfasst, und/oder wobei das Substrat Papier umfasst und/oder ferner umfassend ein Heißsiegeln eines Teils der Beschichtung an einen Teil der diskontinuierlichen Schicht.

## Revendications

1. Article comprenant :
au moins un substrat ayant une première surface et une seconde surface ;
un premier polymère qui est dispersible dans l'eau et qui est choisi parmi (i) un polymère de styrène, (ii) des polymères de monomère d'éthylène et un monomère d'acide carboxylique insaturé, (iii) du téréphtalate de polyéthylène, tous dérivés de ceux-ci, tous copolymères de ceux-ci et toutes combinaisons de ceux-ci, recouvrant la première surface de l'au moins un substrat pour former un revêtement, dans lequel le revêtement de la première surface comprend en outre un minéral, dans lequel le minéral comprend un minéral phyllosilicate ; et
un deuxième polymère recouvrant partiellement la seconde surface de l'au moins un substrat pour former une couche discontinue, dans lequel des parties de la seconde surface du substrat restent découvertes, le deuxième polymère étant identique ou différent du premier polymère ;
dans lequel le revêtement de la première surface est capable de former un thermoscellage avec la couche discontinue sur la seconde surface, éventuellement dans lequel le revêtement comprend de 10 % à 80 % du premier polymère en poids du revêtement.

2. Article selon la revendication 1, dans lequel au moins l'un du premier polymère ou du deuxième polymère comprend un copolymère formé à partir d'au moins deux monomères différents, dans lequel les au moins deux monomères différents peuvent comprendre de l'éthylène et un monomère d'acide carboxylique insaturé, et éventuellement dans lequel le monomère d'acide carboxylique insaturé est choisi parmi l'acide acrylique ou l'acide méthacrylique.

3. Article selon l'une quelconque des revendications précédentes, dans lequel le deuxième polymère comprend du polyétherimide ou un dérivé de celui-ci, et/ou dans lequel un poids de revêtement sec du deuxième polymère sur la seconde surface est compris entre 0,1 g/m² et 3,0 g/m², et /ou dans lequel un poids de revêtement sec du revêtement sur la première surface est compris entre 1,0 g/m² et 9,0 g/m².

4. Article selon l'une quelconque des revendications précédentes, dans lequel le minéral phyllosilicate comprend du talc, du kaolin, du mica ou une combinaison de ceux-ci.

5. Article selon l'une quelconque des revendications 1 à 4, dans lequel le revêtement de la première surface comprend :
une couche interne comprenant un troisième polymère et le minéral, dans lequel le troisième polymère est identique ou différent du premier polymère ; et
une couche extérieure comprenant le premier polymère sans le minéral.

6. Article selon l'une quelconque des revendications précédentes, dans lequel le revêtement de la première surface comprend en outre une couche de pré-revêtement entre la couche interne et la première surface de l'au moins un substrat, la couche de pré-revêtement comprenant de la cellulose ou un troisième polymère, éventuellement dans lequel la couche de pré-revêtement comprend en outre un minéral.

7. Article selon la revendication 5 ou 6, dans lequel le troisième polymère comprend un copolymère contenant du styrène.

8. Article selon l'une quelconque des revendications précédentes, dans lequel la couche discontinue de la seconde surface comprend en outre un minéral, et/ou dans lequel l'au moins un substrat comprend du papier.

9. Article selon l'une quelconque des revendications précédentes, dans lequel (i) l'article est un récipient thermoscellé, la première surface étant une surface intérieure du récipient, et la seconde surface étant une surface extérieure du récipient, ou (ii) dans lequel l'article est un récipient thermoscellé, la première surface de l'au moins un substrat étant une surface extérieure du récipient, et la seconde surface de l'au moins un substrat étant une surface intérieure du récipient, dans lequel, en outre, dans (i) ou (ii), le récipient thermoscellé peut être configuré pour contenir un liquide à une température allant de 10 °C à 100 °C.

10. Procédé de fabrication d'un article, le procédé comprenant :
la formation d'un revêtement sur une première surface d'un substrat par l'application d'une dispersion aqueuse comprenant un premier polymère sur la première surface, dans lequel le premier polymère est choisi parmi (i) un polymère de styrène, (ii) des polymères de monomère d'éthylène et d'un monomère d'acide carboxylique insaturé, (iii) un polyéthylène téréphtalate, tous dérivés de ceux-ci, tous copolymères de ceux-ci, et toutes combinaisons de ceux-ci, et dans lequel la dispersion aqueuse appliquée à la première surface comprend en outre un minéral, dans lequel le minéral comprend un minéral phyllosilicate ; et
la formation d'une couche discontinue sur une seconde surface du substrat, dans lequel des parties de la seconde surface du substrat restent découvertes par l'application d'une dispersion comprenant un deuxième polymère sur des parties de la seconde surface, dans lequel le deuxième polymère est identique ou différent du premier polymère ;
dans lequel le revêtement de la première surface est capable de former un thermoscellage avec la couche discontinue sur la seconde surface, éventuellement dans lequel le revêtement comprend de 10 % à 80 % du premier polymère en poids du revêtement.

11. Procédé selon la revendication 10, dans lequel au moins l'un du premier polymère ou du deuxième polymère est formé à partir d'au moins deux monomères différents, dans lequel les au moins deux monomères différents peuvent comporter de l'éthylène et un monomère d'acide carboxylique insaturé, et/ou dans lequel un poids de revêtement sec du deuxième polymère sur la seconde surface peut aller de 0,1 g/m² à 3,0 g/m².

12. Procédé selon l'une quelconque des revendications 10 à 11, dans lequel le minéral comprend du talc, du kaolin, du mica ou une combinaison de ceux-ci.

13. Procédé selon l'une quelconque des revendications 10 à 12, dans lequel la formation du revêtement sur la première surface comprend :
l'application d'une première dispersion aqueuse comprenant le premier polymère et le minéral pour former une couche interne ; et
l'application sur la couche interne d'une deuxième dispersion aqueuse comprenant le premier polymère sans le minéral pour former une couche externe, dans lequel la formation du revêtement sur la première surface peut en outre comprendre : avant d'appliquer la première dispersion aqueuse, l'application d'une troisième dispersion aqueuse comprenant un troisième polymère différent du premier polymère pour former une couche de pré-revêtement, de sorte que la couche de pré-revêtement se trouve entre la première surface du substrat et la couche interne, et éventuellement dans lequel le troisième polymère comprend de la cellulose ou un copolymère contenant du styrène, ou dans lequel la troisième dispersion aqueuse comprend en outre un minéral.

14. Procédé selon l'une quelconque des revendications 10 à 13, dans lequel la dispersion aqueuse appliquée sur la seconde surface comprend un solvant organique, et/ou dans lequel la dispersion appliquée sur la seconde surface du substrat comprend en outre un minéral, et/ou dans lequel le substrat comprend du papier, et/ou comprenant en outre le thermoscellage d'une partie du revêtement à une partie de la couche discontinue.
